# EUROPEAN PATENT SPECIFICATION

(11) **EP 0 865 605 B1**
(45) Date of publication and mention of the grant of the patent: **24.03.2004**
(21) Application number: 97941167.5
(22) Date of filing: 05.09.1997
(51) Int. Cl.: G01N 21/00, G01N 21/84, G01B 11/30, G01N 21/88, G11B 7/00

(54) **DEVICE AND PROCESS FOR INSPECTING A SURFACE OF A GLASS MASTER**
VORRICHTUNG UND VERFAHREN ZUM PRÜFEN EINER OBERFLÄCHE EINER RUNDEN GLASSCHEIBE
DISPOSITIF ET PROCEDE D'INSPECTION D'UNE SURFACE D'UN DISQUE DE VERRE

(30) Priority: 05.09.1996 US 708671
(43) Date of publication of application: 23.09.1998
(73) Proprietor: WEA Manufacturing, Inc., Olyphant, PA 18447 (US)
(72) Inventor: SUHAN, John, M., Blakely, PA 18447 (US)
(74) Representative: Lewin, John Harvey
(86) International application number: PCT/IB1997/001232
(87) International publication number: WO 1998/010268

(56) References cited:
- JP-A- 7 140 089
- US-A- 4 477 890
- US-A- 4 865 445
- US-A- 4 954 723

## Description

### Field Of The Invention

This invention relates to the manufacture of compact discs for the optical recording of digital data. In particular it relates to the quality control of the preparation of the surface of the glass substrate of the optical disc master during the manufacturing process.

### Background Of The Invention

Compact discs are record carriers for digital or analog information, for example audio and/or video information, which have the form of a flat disc-shaped plastic surface on which a data modulated optical structure is provided in accordance with the information. The data is formed as pits of varying length present in the surface and arranged in a spiral path. The pits have nanometer dimensions and are formed by injection molding against a mold having corresponding raised regions. The information stored on the compact disc is recovered in a reader, usually called a player, which rotates the compact disc and guides a laser device along the spiral track as the compact disc rotates. The presence or absence of pits under the laser is detected as a change in the luminance returned from the surface directly below the laser. In this manner the length of the pits is detected and decoded as data.

The creation of a compact disc requires the construction of the mold to be used in an injection molding process. In order to mass produce identical compact discs several stampers are prepared since each has only a reasonable number of uses before it is degraded in the molding process. These stampers are prepared by coating thin metallic layers upon a surface having the inverse pit pattern, i.e. raised areas where pits are desired in the next generation of copies. The process begins with a surface called the glass master.

The glass master is the first generation in the molding process having the data structure desired in the final compact disc. The glass master is a high quality flat glass surface onto which is coated a photo-resist material. The coated glass master is rotated below a laser that moves radially outward from the center of the glass master forming a series of exposed and unexposed areas in a spiral track along the surface of the glass master. The laser intensity pulsates in accord with the data to be recorded on the glass master. The photo-resist material is differentially etched in an acid bath so that the portions exposed by the laser dissolve, thereby leaving a series of pits corresponding to the desired data. The glass master is then coated with a metal layer, typically by a metal deposition chamber. The metal layer is removed to form the second generation of molding surfaces and is deposited with an additional layer of metal in an electro-forming bath.

The critical dimensions of the recorded pits on the glass master are of the order of magnitude of the wavelength of visible light. Accordingly, it is critical to reducing the errors in data recording on the glass master surface that the glass master surface be kept clean throughout its entire course of usage. It is extremely costly to discover that a master is too error prone only after the time consuming process of recording all the data on the surface and performing the acid etching steps have been concluded. This is especially true where the glass mastering step is part of a mass production line.

There has been consideration of the detection of defects in or on glass surfaces in the prior art. In particular, U.S. patent 4,306,808 issued Dec. 22, 1981 for a "Glass flaw inspection system". This system employed a laser to scan lines across the surface from a very high angle of incidence in order to detect defects caused by tin dripping onto the glass. U.S. patent 5,311,276 issued May 10, 1994 for "Apparatus for detecting cut-edge flaws in glass plates". In this system, light from a linear light source was received by a 1-dimensional imaging device so that flaws in the cut edges of the glass were detected by a discriminator. U.S. patent 5,343,288 issued Aug.30, 1994 for "Optical evaluation of automotive glass". In this system a light was directed in narrow elongated beams. A line scan camera array system scanned the display area and produced signals indicative of the position of images of the beams reflected by the opposite surfaces of the windshield. U.S. patent 5,309,486 issued May 3, 1994 for "Non-contact flaw detecting for cylindrical nuclear fuel pellets". In this system surface flaws were detected by using a line scan camera to record a series of scans and pixel values were compared to thresholds. U.S. patent 4,914,828 issued Apr. 10, 1990 for "Surface inspection device and method". This system measured surface irregularities on curved automotive glass by calculating the local radius of curvature between two points. U.S. patent 4,874,940 issued Oct. 17, 1989 for a "Method and apparatus for inspection of a transparent container". This system inspected the bottom of a container for internal stuck glass or foreign material. It used a linearly extending line of light, which when reflected from a defect exceeded a predetermined threshold value. U.S. patent 4,741,042 issued Apr. 26, 1988 for an image processing system for detecting bruises on fruit. The system employed a line scan camera to obtain a series of gray levels from the fruit as it rotated. The image was processed to determine size of bruise by assuming that the circular shape of a region of differing gray level should be interpreted as a bruise. U.S. patent 4,403,230 issued Sep. 6, 1983 for "Inspection of castings". A revolving camera is employed during the inspection for defects. U.S. patent 4,335,960 issued Jun. 22, 1982 for "Apparatus for detecting the presence of surface irregularities in articles made of transparent material". This apparatus detected spikes on the inside base of glass containers, which were passed rotatably over a slit having an opaque line in the slit. Two light sources emit light that refracted at an oblique angle through the container base into a diode camera when there was an irregularity. U.S. patent 5,204,911 issued Apr. 20, 1993 for an "Inspection method using unique templates and histogram analysis". This system was used for detecting defects in products either stationary or on a production line. A line-scan camera was used to compare an image with values stored in a matrix corresponding to geometrical grid areas of the product. U.S. patent 5,147,047 issued Sep. 15, 1992 for a "Pellet inspection system". A linear portion of the pellet was inspected and digital data generated that is compared to a standard. During inspection the pellet was moved axially. U.S. patent 3,962,538 issued Jun. 8, 1976 for a "Flying spot scanning system with virtual scanners". In this system a symmetrical arrangement of prisms scans were made across a medium having a planar surface. U.S. patent 4,319,270 issued Mar. 9, 1982 for a surface inspection system for hot radiant material". This system used a multi-camera system on all sides of a hot radiant material transferred along a predetermined transfer line

US 4,954,723 describes a method and apparatus for scanning the surface of an optical disk. A flying light spot is used to scan the disk and a light-detecting unit receives light reflected from the disk to evaluate the disk surface.

US 4,477,890 describes apparatus for generating a map of detectable characteristics of a disk, using a laser beam.

Although the prior art has been concerned with the detection of the irregularity of glass surfaces and has used optical systems to determine the presence of such irregularities, none of the systems appear adapted to cope with the special problems encountered in compact disc manufacture. In particular what is needed is a system for determining the irregularities of micron dimension in a glass substrate that is intentionally coated with a surface having pits of nanometer dimension. Moreover, the inspection has to ignore the remote surface of the glass master and therefore an equally reflective surface whose flatness is essentially immaterial to quality control. Furthermore, in most of the prior art, no advantage is taken of the fact that the surface to be inspected is a flat disc, which feature greatly enables the present process to be speeded up over that prior art by rotation of the object to be inspected.

### Brief Description Of The Invention

The present invention relates to a system for detecting imperfections of one planar surface of a disc-shaped glass master as set out in claim 1. The system includes a self-centering chuck for retaining said glass master and allowing it to rotate beneath an illumination source, preferably a highly collimated and focused source directed at the upper surface of the compact disc so that it illuminates the surface under test along only one radius. By one radius is meant a narrow slit of the disc along a line from near its center to the edge of the disc or along a portion of a diameter. It is not necessary to include a central portion of the disc where no data is usually recorded.

The system may also include a video camera or other device for receiving light from the illumination source that reflects from the surface under study. The camera is a detection means, which is oriented to receive illumination reflected only from an imperfectly flat portion of the surface being inspected. In order not to be affected by light reflected from the "uninteresting" surface of the disc the camera has optics for receiving said light which has a depth of focus less than the thickness of the glass master.

In another aspect there is provided a process for detecting imperfection of one planar surface of a disc-shaped glass master as set out in claim 3.

A stepping motor or other means for rotating said glass master is used to turn the glass master through a number of positions during at least one complete revolution while it is exposed to the light source. The signal received in the video camera is then processed to compare the light level received with that from an assumed flat portion of the disc. If a significant discrepancy is found between the light reflected from different radii, the disc is rejected.

### Brief Description Of The Drawings

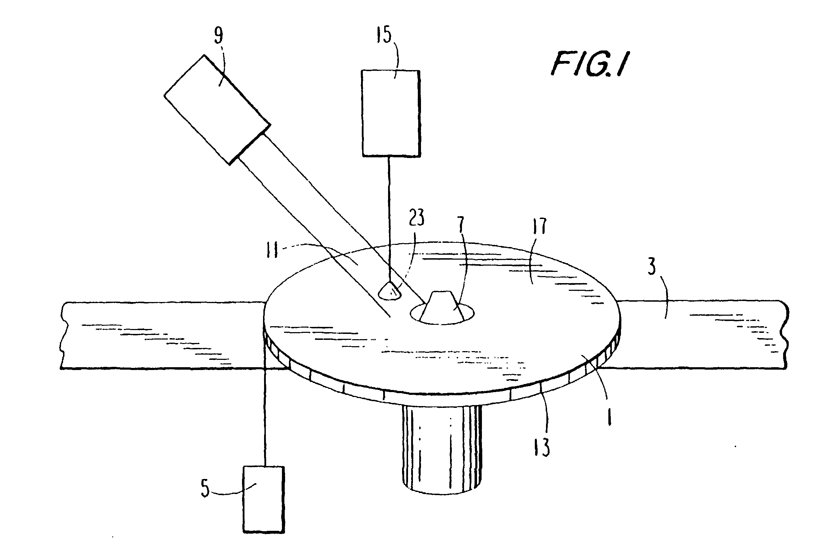

Figure 1 is a perspective view of the glass master in an inspection station of the present invention.

### Detailed Description Of a Preferred Embodiment

Figure 1 shows a stage of an assembly line for the production of glass masters. A glass master 1 is brought by a conveyer belt 3 into an inspection chamber (not shown) where it is detected by a sensor 5. A self-centering chuck 7 engages the glass master through a hole in its center. The surface of the glass master may at this point be uncoated, or coated with various materials including, but not limited to surface preparation or metalization layers. The surface is illuminated by a light source 9, which illuminates at least a narrow radial strip 11 of the surface of the glass master. The illuminating light may be focused narrowly so that it does not provide substantial illumination of the lower surface 13 of the glass master. However it is difficult to arrange such a narrow focus.and at the same time to illuminate the full length of the radial strip 11. Accordingly, a line scan camera 15 is provided directly above the upper surface 17 of the glass master with optics whose depth of focus does not resolve details of light emitted from the lower surface 13. A line scan camera is preferred for this operation because it is capable of much higher spatial resolution than the traditional two-dimensional photosite video cameras.

A servo-motor drives a shaft and the chuck 7 to cause rotation of the glass master beneath the camera 15. Prior to rotation of the glass master, a reference line of video data is collected from the image of the glass beneath the line-scan camera 15. The illumination source 9 is preferably an incandescent illumination that employs precise angles of incidence (depicted in the figure as lines emanating from the source 9). These angles are chosen so that a glass master without defects appears "dark" to the camera. Defects, such as the bump 23 in the view of the camera will appear "bright" to the camera.

The image of the camera is divided into pixels. Preferably 2048 useable pixels are employed across the array of the line scan camera. If all the pixels of the image generally appear "dark", the image is accepted as a reference image. If any pixels appear to be "bright" the glass is repositioned by rotation for a proper reference line until such a reference line is found. Where the surface has been metalized, it is possible for defects to appear bright or dark, the darkness being associated with the absorption of the light at the imperfect surface. It is thus necessary to establish a template value and to compare this with the values of different radii, and not merely rely upon the simple association of brightness with imperfection and darkness with perfection.

Since the bottom side of the glass master is not important to the inspection, the camera lens is chosen such that the depth of focus of the optical system does not resolve any flaws contained on the bottom side of the glass.

To acquire a reference line an image processing algorithm known as "template matching" is used. It operates as follows: The line scan camera employs 2048 usable pixels across its array. The reference image is comprised of 2048 8-bit (0-255) intensity values which correspond to the actual intensity distribution of light across the linear array. If the scan of the glass is to reveal no defects, the test intensity values should remain near the reference value within some small tolerance value. If the scan of the glass is to reveal defects, the test intensity values will deviate from the reference intensity beyond some tolerance which is predetermined by experimentation and practical specification. It has been found acceptable if the tolerance value is approximately 0.8% and the deviation be calculated as a mean square value of less than 0.6%.

The glass master is rotated through angles so that the different radial scans slightly overlap at their edges. The stepping motor is then advanced until the entire surface has been scanned at least one time.

In the event that a defect is detected, a signal is generated to begin the removal of the flawed glass. The process is then repeated for each glass master in the production line.

While there have been shown and described and pointed out the fundamental novel features of the invention as applied to preferred embodiments thereof, it will be understood that various omissions and substitutions and changes in the form and details of the device illustrated and in its operation may be made by those skilled in the art without departing from the scope of the invention as defined by the appended claims.

## Claims

1. Apparatus for detecting imperfections (23) of one planar surface (17) of a disc-shaped glass master (1) for use in the production of compact discs for the optical recording of data comprising
self-centering chuck means (7) for retaining said glass master (1),
illumination means (9) for focusing light upon said one planar surface (17);
detection means (15) for receiving light from said illumination means reflected from said glass master (1), said detection means being oriented to receive illumination reflected only from an imperfectly flat portion of said one planar surface;
means for rotating said glass master (1) through at least one complete revolution while exposed to focused light from said illumination means (9),
means arranged to indicate rejection of said glass master (1) when the light level received by said detection means (15) exceeds a value determined from prior light levels received from said glass master surface,
**characterised in that**
the illumination means (9) is arranged to illuminate the full length of a radial strip (11) along a radius of said one planar surface through the glass master; and
the detection means (15) is a line camera
comprising optics for receiving said light, said optics having a depth of focus less than the thickness of said glass master.

2. The apparatus of claim 1 wherein said line camera (15) is located directly above the position of the glass master (1) under inspection.

3. A process for detecting imperfections of one planar surface (17) of a disc-shaped glass master (1) for use in the production of compact discs for the optical recording of data, the process comprising the steps of
(a) placing the glass master (1) on a self-centering chuck (7),
(b) illuminating said one surface (17) of the glass master (1) along the full length of a radial strip (11) by directing an illuminating light through said glass master (1) inclined at an acute angle with respect to the axis of the disc-shaped glass master (1),
(c) receiving light reflected from said one surface (17) of said glass master (1) in a line scan camera (15), said line scan camera (15) being oriented to detect light reflected from different radii along the radial strip (11), but not to receive light from perfectly planar portions of the glass master (1), and said line camera (15) comprising optics for receiving said light, said optics having a depth of focus less than the thickness of the glass master (1);
(d) recording a set of pixel values corresponding to reflected light from different radii along the radial strip (11),
(e) rotating said glass master (1) through at least one full revolution and comparing values, of light intensity received with those recorded in step (d),
(f) rejecting the glass master (1) if the comparison of step (e) provides values in excess of those from a first operation of step (c).

## Patentansprüche

1. Vorrichtung zum Erfassen von Unvollkommenheiten (23) einer planaren Oberfläche (17) einer scheibenförmigen Glasmatrize (1) zur Verwendung bei der Herstellung von CD-Platten für das optische Aufzeichnen von Daten, die folgende Merkmale aufweist:
eine selbstzentrierende Einspanneinrichtung (7) zum Halten der Glasmatrize (1);
eine Beleuchtungseinrichtung (9) zum Fokussieren von Licht auf die eine planare Oberfläche (17);
eine Erfassungseinrichtung (15) zum Empfangen von Licht von der Beleuchtungseinrichtung, das von der Glasmatrize (1) reflektiert wird, wobei die Erfassungseinrichtung ausgerichtet ist, um eine Beleuchtung zu empfangen, die nur von einem unvollkommen flachen Abschnitt der einen planaren Oberfläche reflektiert wird;
eine Einrichtung zum Drehen der Glasmatrize (1) um zumindest eine vollständige Umdrehung, während dieselbe einem fokussierten Licht von der Beleuchtungseinrichtung (9) ausgesetzt ist;
eine Einrichtung, die angeordnet ist, um eine Abweisung der Glasmatrize (1) anzugeben, wenn der Lichtpegel, der durch die Erfassungseinrichtung (15) empfangen wird, einen Wert überschreitet, der aus früheren von der Glasmatrizenoberfläche empfangenen Lichtpegeln bestimmt ist,
**dadurch gekennzeichnet, daß**
die Beleuchtungseinrichtung (9) angeordnet ist, um die volle Länge eines radialen Streifens (11) entlang einem Radius der einen planaren Oberfläche durch die Glasmatrize zu beleuchten; und
die Erfassungseinrichtung (15) eine Linienkamera ist, die Optiken zu einem Empfangen des Lichts aufweist, wobei die Optiken eine Schärfentiefe aufweisen, die geringer ist als die Dicke der Glasmatrize.

2. Die Vorrichtung gemäß Anspruch 1, bei der die Linienkamera (15) direkt über der Position der zu überprüfenden Glasmatrize (1) positioniert ist.

3. Ein Prozeß zum Erfassen von Unvollkommenheiten einer planaren Oberfläche (17) einer scheibenförmigen Glasmatrize (1) zur Verwendung bei der Herstellung von CD-Platten für das optische Aufzeichnen von Daten, wobei der Prozeß folgende Schritte aufweist:
(a) Plazieren der Glasmatrize (1) auf einer selbstzentrierenden Einspannvorrichtung (7);
(b) Beleuchten der einen Oberfläche (17) der Glasmatrize (1) entlang der vollen Länge eines radialen Streifens (11) durch ein Richten eines Beleuchtungslichts durch die Glasmatrize (1), das in einem spitzen Winkel bezüglich der Achse der scheibenförmigen Glasmatrize (1) geneigt ist;
(c) Empfangen von Licht, das von der einen Oberfläche (17) der Glasmatrize (1) reflektiert wird, in einer Linienabtastkamera (15), wobei die Linienabtastkamera (15) ausgerichtet ist, um ein Licht zu erfassen, das von unterschiedlichen Radien entlang dem radialen Streifen (11) reflektiert wird, aber kein Licht von vollkommen planaren Abschnitten der Glasmatrize (1) zu empfangen, und wobei die Linienkamera (15) Optiken zum Empfangen des Lichts aufweist, wobei die Optiken eine Schärfentiefe aufweisen, die geringer ist als die Dicke der Glasmatrize (1);
(d) Aufzeichnen eines Satzes von Pixelwerten, die einem reflektierten Licht von unterschiedlichen Radien entlang dem radialen Streifen (11) entsprechen;
(e) Drehen der Glasmatrize (1) um zumindest eine vollständige Umdrehung und Vergleichen von Werten einer empfangenen Lichtintensität mit denjenigen, die im Schritt (d) aufgezeichnet werden;
(f) Abweisen der Glasmatrize (1), falls der Vergleich von Schritt (e) Werte über denjenigen von einer ersten Operation von Schritt (c) liefert.

## Revendications

1. Appareil pour détecter les imperfections (23) d'une surface plane (17) d'un disque de verre (1) devant être utilisé dans la production de disques compacts pour l'enregistrement optique de données comprenant
des moyens formant mandrin concentrique (7) pour maintenir ledit disque de verre (1) ;
des moyens d'éclairage (9) pour diriger une lumière sur ladite surface plane (17) ;
des moyens de détection (15) pour recevoir la lumière desdits moyens d'éclairage réfléchie par ledit disque de verre (1), lesdits moyens de détection étant orientés pour recevoir l'éclairage réfléchi uniquement par une partie qui n'est pas parfaitement plate de ladite surface plane ;
des moyens pour faire tourner ledit disque de verre (1) d'au moins un tour complet alors qu'il soit exposé à la lumière focalisée provenant desdits moyens d'éclairage (9) ;
des moyens conçus pour indiquer le rejet dudit disque de verre (1) lorsque le niveau de lumière reçu par les moyens de détection (15) dépasse une valeur déterminée à partir de niveaux de lumière précédents reçus de ladite surface du disque de verre,
**caractérisé en ce que**
les moyens d'éclairage (9) sont conçus pour éclairer l'ensemble de la longueur d'une bande radiale (11) sur un rayon de ladite surface plane à travers le disque de verre ; et
les moyens de détection (15) sont une caméra linéaire comprenant des optiques pour recevoir ladite lumière, lesdits optiques ayant une profondeur de foyer inférieure à l'épaisseur dudit disque de verre.

2. Appareil selon la revendication 1, dans lequel ladite caméra linéaire (15) est située directement au-dessus de la position du disque de verre (1) faisant l'objet du contrôle.

3. Procédé pour détecter les imperfections d'une surface plane (17) d'un disque de verre (1) devant être utilisé dans la production de disques compacts pour l'enregistrement optique de données, ; le procédé comprenant les étapes consistant à
(a) mettre en place le disque de verre (1) sur un mandrin concentrique (7) ;
(b) éclairer ladite une surface (17) du disque de verre (1) sur l'ensemble de la longueur d'une bande radiale (11) en dirigeant une lumière d'éclairage à travers ledit disque de verre (1) inclinée à un angle aigu par rapport à l'axe du disque de verre (1).
(c) recevoir la lumière réfléchie par ladite surface (17) dudit disque de verre (1) dans une caméra à balayage linéaire (15), ladite caméra à balayage linéaire (15) étant orientée pour détecter la lumière réfléchie de différents rayons le long de la bande radiale (11), mais non pour recevoir la lumière de parties parfaitement planes du disque de verre (1), et ladite caméra linéaire (15) comprenant des optiques pour recevoir ladite lumière, lesdits optiques ayant une profondeur de foyer inférieure à l'épaisseur du disque de verre (1) ;
(d) enregistrer un ensemble de valeurs de pixels correspondant à la lumière réfléchie de différents rayons le long de la bande radiale (11),
(e) faire tourner ledit disque de verre (1) d'au moins un tour complet et comparer les valeurs d'intensité lumineuse reçues à celles enregistrées dans l'étape (d),
(f) rejeter le disque de verre (1) si la comparaison de l'étape (e) donne des valeurs supérieures à celles issues d'une première opération de l'étape (c).
